**Europäisches Patentamt**

**European Patent Office**

**Office européen des brevets**

(11) Veröffentlichungsnummer: **0 107 164**
**B1**

# EUROPÄISCHE PATENTSCHRIFT

(45) Veröffentlichungstag der Patentschrift:
**14.05.86**

(21) Anmeldenummer: **83110334.6**

(22) Anmeldetag: **17.10.83**

(51) Int. Cl.⁴: **B 29 C 41/00**

(54) **Metallringgeflecht für Schutzhandschuhe und Verfahren zu seiner Herstellung.**

(30) Priorität: **18.10.82 DE 3238499**

(43) Veröffentlichungstag der Anmeldung:
**02.05.84 Patentblatt 84/18**

(45) Bekanntmachung des Hinweises auf die Patenterteilung:
**14.05.86 Patentblatt 86/20**

(84) Benannte Vertragsstaaten:
**CH FR GB LI SE**

(56) Entgegenhaltungen:
**DE - A - 1 529 916**
**DE - A - 2 721 410**
**DE - A - 3 023 990**
**FR - A - 942 103**
**FR - A - 2 525 083**
**US - A - 3 141 173**

(73) Patentinhaber: **Friedrich Münch GmbH & Co. KG,
Goldshaldenstrasse 20, D-7130 Mühlacker (DE)**

(72) Erfinder: **Die Erfinder haben auf Ihre Nennung verzichtet**

(74) Vertreter: **Twelmeier, Ulrich, Dipl.Phys. et al,
Patentanwälte Dr. Rudolf Bauer Dipl.-Ing.Helmut
Hubbuch, Dipl.Phys. Ulrich Twelmeier Westliche
Karl-Friedrich-Strasse 29-31, D-7530 Pforzheim (DE)**

## Beschreibung

Die vorliegende Erfindung verbessert ein Metallringgeflecht für Schutzhandschuhe.

Aus Metallringgeflechten hergestellte Schutzhandschuhe werden von Personen getragen, die mit Werkzeugen oder Gegenständen umgehen, welche ein besonderes Risiko von Schnittverletzungen der Hände in sich bergen, z.B. von Metzgern oder von Arbeitern in der Glasindustrie, die scharfkantige Glastafeln handhaben müssen, oder von Arbeitern in der Metallindustrie, die Blechtafeln handhaben müssen, um nur einige der Verwendungsmöglichkeiten solcher Schutzhandschuhe zu nennen. Solche Handschuhe sollen einerseits einen hinreichenden Schutz vor Verletzungen bieten, sollen andererseits aber die Handhabung von Gegenständen nicht unnötig erschweren. Es wird daher für die Schutzhandschuhe ein sehr flexibles Metallgeflecht verlangt, welches sich der Hand bereitwillig anschmiegt und Bewegungen der Hand und der Finger insbesondere beim Greifen möglichst wenig behindert. Zu diesem Zweck haben sich Metallringgeflechte sehr bewährt. Unter einem Metallringgeflecht wird ein Metallgeflecht verstanden, welches aus Metallringen aufgebaut ist, die einander wechselseitig lose umschlingen.

Die bisher bekannten Schutzhandschuhe aus Metallringgeflecht haben materialbedingt den Nachteil einer geringen Griffigkeit. Dieser Nachteil macht sich besonders dann bemerkbar, wenn mit Gegenständen hantiert wird, die selbst eine glatte Oberfläche besitzen.

Der Erfindung liegt die Aufgabe zugrunde, ein Metallringgeflecht zu schaffen, aus welchem sich Schutzhandschuhe mit verbesserter Griffigkeit herstellen lassen.

Diese Aufgabe wird gelöst durch ein Metallringgeflecht mit den im Anspruch 1 angegebenen Merkmalen. Ein besonders geeignetes Verfahren zur Herstellung eines solches Geflechts ist Gegenstand des Anspruchs 11. Vorteilhafte Weiterbildungen der Erfindung sind Gegenstand der Unteransprüche.

Die Erfindung nutzt die Erkenntnis, dass zur Erzielung einer hohen Griffigkeit von Metallringgeflechthandschuhen nicht das Metallringgeflecht als Ganzes eine hohe Griffigkeit aufweisen muss, sondern dass es genügt, dem Metallringgeflecht stellenweise eine hohe Griffigkeit zu verleihen. «Stellenweise» soll nicht bedeuten, dass beim fertigen Schutzhandschuh z.B. das die Handinnenseite bedeckende Metallringgeflecht insgesamt rutschhemmend ausgestattet sein kann, wohingegen das dem Handrücken aufliegende Metallringgeflecht von dem rutschhemmenden Werkstoff z.B. ganz oder teilweise frei bleibt, vielmehr ist «stellenweise» so zu verstehen, dass auch und vor allem das die Handinnenseite bedeckende Metallringgeflecht eines Handschuhs nur an einer Anzahl von Stellen rutschhemmend ausgestattet ist, und zwar erfindungsgemäss in der Weise, dass das Geflecht an diesen Stellen in einen rutschhemmenden Werkstoff eingebettet ist. Zweckmässigerweise wird man den rutschhemmenden Werkstoff nur dort vorsehen, wo er tatsächlich die Griffigkeit erhöht, nämlich im Bereich des die Handinnenseite bedeckenden Geflechts, wohingegen das Geflecht, mit welchem die den Handrücken bedeckende Handschuhseite gebildet wird, und das zwischen den Fingern liegende Geflecht vollständig frei bleiben kann und vorzugsweise frei bleibt von dem rutschhemmenden Werkstoff.

Das nur stellenweise Einbetten des Metallringgeflechts in rutschhemmenden Werkstoff erhält dem Metallringgeflecht die nötige Flexibilität. Eine einheitliche, auch auf den Bereich der Handinnenseite beschränkte Beschichtung des Metallringgeflechts mit einem rutschhemmenden Werkstoff, z.B. durch ein Tauchverfahren oder durch ein Spritzverfahren, würde die Schutzhandschuhe — wenn die Beschichtung hinreichend wirksam und dauerhaft wäre — für den praktischen Gebrauch zu steif machen.

Um den Verbund zwischen dem Metallringgeflecht und dem rutschhemmenden Werkstoff hinreichend dauerhaft zu gestalten, soll das Metallringgeflecht in den Werkstoff eingebettet sein, insbesondere in der Weise, dass das Metallringgeflecht an den jeweiligen Stellen, wo sich der rutschhemmende Werkstoff befindet, von diesem unter Bedeckung der Oberseite und der Unterseite des Metallringgeflechts durchdrungen ist.

Der rutschhemmende Werkstoff wird vorzugsweise in Form von Strängen (die geradlinig oder gekrümmt verlaufen können) oder Fladen auf dem Metallringgeflecht angeordnet. Werden Stränge gebildet, dann können sich diese auch überkreuzen, doch wird das nicht bevorzugt, da dieses das Geflecht und damit die Handschuhe steifer macht. Um die Flexibilität des Geflechts möglichst wenig zu beeinträchtigen, sollen die Stränge aus dem rutschhemmenden Werkstoff nicht breiter sein bzw. die alternativ oder in Kombination damit vorgesehenen Fladen nicht grösser sein, als zu ihrer dauerhaften Verankerung im Metallringgeflecht erforderlich ist, und zwar sollten die Stränge breiter sein als der (grösste) Ringdurchmesser; der Fladendurchmesser sollte ebenfalls grösser sein als der (grösste) Ringdurchmesser; zweckmässig sollte die Grundfläche der Fladen das Drei- bis Fünfzehnfache, vorzugsweise das Vier- bis Zehnfache der Fläche eines Metallrings des Metallringgeflechts betragen, wobei für die Berechnung der Fläche des Metallrings von dessen Aussendurchmesser ausgegangen wird, welcher bei typischen Metallringgeflechten aus kreisförmigen Ringen zwischen 2 mm und 6 mm beträgt. In der Praxis bewähren sich somit Fladen mit einer Grundfläche zwischen 30 mm² und 100 mm², insbesondere solche mit einer Grundfläche von ca. 60 mm².

Die Ausbildung des rutschhemmenden Werkstoffs in Gestalt von Fladen belässt dem Metallringgeflecht eine grössere Flexibilität als die Ausbildung des rutschhemmenden Werkstoffs in Gestalt von Strängen, weshalb die Ausbildung von Fladen bevorzugt ist.

Die Stränge oder Fladen — je nachdem, was zur Anwendung kommt — sollten vorzugsweise wenigstens auf ihrer Oberseite überwiegend konvex sein, d.h. sich merklich über die Oberseite des Metallringgeflechts hinaus erheben, was sich vorteilhaft auswirkt auf die Griffigkeit und auf die Verschleissfestigkeit. Aus Gründen der Festigkeit der Verankerung des rutschhemmenden Werkstoffs im Metallringgeflecht und zur Erzielung einer abpolsternden Wirkung ist es zu empfehlen, auch die Unterseite der Stränge oder Fladen überwiegend konvex zu gestalten, zweckmässig aber weniger stark konvex als die Oberseite. «Überwiegend konvex» soll bedeuten, dass die Stränge oder Fladen vor allem in ihrem Mittelbereich erhaben sein sollen, wohingegen ihr Randbereich mit Vorteil nicht steil, sondern flach in das Metallringgeflecht abfällt, um am Rand der Fladen oder Stränge möglichst wenig Angriffsfläche für ein Abrubbeln des rutschhemmenden Werkstoffs vom Metallringgeflecht zu bieten. In diesem Zusammenhang ist es besonders vorteilhaft, die Stränge und Fladen so auszubilden, dass sie auf der Unterseite des Metallringgeflechts jeweils einen grösseren Bereich des Metallringgeflechts überdecken als auf der Oberseite, weil dadurch zwangsläufig der Rand der Fladen bzw. Stränge, an welchem ein Abrubbeln des rutschhemmenden Werkstoffs in erster Linie einsetzen kann, in das Innere des Geflechts oder gar an dessen Unterseite verlegt und damit geschützt ist.

Besonders bevorzugt werden im Metallringgeflecht Fladen aus rutschhemmendem Werkstoff in Linsenform verankert, welche auf ihrer Unterseite einen etwas grösseren Durchmesser aufweisen als auf ihrer Oberseite und deren Unterseite schwächer gekrümmt ist als ihre Oberseite. Die Griffigkeit eines derart ausgerüsteten Metallringgeflechts bzw. Metallringgeflechthandschuhs lässt sich noch verbessern durch eine Abplattung oder flache Einbuchtung im Zentrum der Oberseite der Fladen, insbesondere der Linsen.

Als rutschhemmende Werkstoffe eignen sich besonders elastomere Kunststoffe, vor allem solche auf Silikonbasis.

Zur Herstellung eines erfindungsgemäss ausgerüsteten Metallringgeflechts wird das im Anspruch 11 beschriebene Verfahren vorgeschlagen. Es geht aus von einem herkömmlichen Metallringgeflecht, dessen Herstellung Stand der Technik ist und deshalb hier nicht weiter beschrieben wird. Die aus rutschhemmendem Werkstoff bestehenden Stränge oder Fladen, insbesondere Linsen, werden dadurch erzeugt, dass das Metallringgeflecht zwischen die beiden Halbschalen einer zweiteiligen Hohlform eingelegt wird und dass der rutschhemmende Werkstoff in zunächst fliessfähigem Zustand durch eine zentrale Öffnung in einer der Halbschalen, vorzugsweise der oberen Halbschale, unter Druck und in vorgegebener Menge in die Form eingespritzt wird. Dabei wird in Kauf genommen, dass die Hohlform wegen des Metallringgeflechts seitlich nicht vollständig geschlossen werden kann, so dass ein Teil des eingespritzten Werkstoffs seitlich aus der Hohlform austreten kann und zu einer etwas unregelmässigen Kontur führt, was jedoch die hier massgeblichen Eigenschaften der Stränge oder Fladen (Linsen) nicht beeinträchtigt. Die beiden Halbschalen der Hohlform können entfernt werden, sobald der rutschhemmende Werkstoff sich soweit verfestigt hat (ausgehärtet ist), dass die Stränge oder Fladen ihre Gestalt beibehalten. Massnahmen zur Beschleunigung des Aushärtens von elastomeren Werkstoffen sind dem Fachmann bekannt und können bei Bedarf hier durchgeführt werden.

Besonders geeignet für das Verfahren wie für die Griffigkeit und Haltbarkeit des damit ausgerüsteten Geflechts sind elastomere Kunststoffe, insbesondere Silikonkautschuke.

Vorzugsweise wird das Metallringgeflecht erst dann mit dem rutschhemmenden Werkstoff ausgerüstet, nachdem aus dem Geflecht ein Handschuh gebildet wurde, weil dann die Auswahl der Stellen, an denen der rutschhemmende Werkstoff vorgesehen sein soll, besonders bequem, einfach reproduzierbar und zuverlässig erfolgen kann, z.B. mittels einer auf die Gestalt des Handschuhs abgestimmten Schablone.

Ausführungsbeispiele des erfindungsgemäss ausgerüsteten Metallringgeflechts sind in den beiliegenden Zeichnungen dargestellt.

Fig. 1 zeigt die Draufsicht auf ein Stück eines Metallringgeflechts mit darin verankerter Linse aus elastomerem Werkstoff,

Fig. 2 zeigt den Schnitt II-II durch dieses Geflecht,

Fig. 3 zeigt eine Darstellung entsprechend Fig. 2 mit abgewandelter Linsenform,

Fig. 4 zeigt eine Darstellung entsprechend Fig. 3 mit nochmals abgewandelter Linsenform,

Fig. 5 zeigt die Draufsicht auf ein Stück eines Metallringgeflechts mit darin verankertem Strang aus elastomerem Werkstoff, und

Fig. 6 zeigt den Schnitt VI-VI durch das Geflecht aus Fig. 5.

In den verschiedenen Darstellungen sind übereinstimmende oder einander entsprechende Teile mit übereinstimmenden Bezugszahlen bezeichnet.

Das dargestellte Metallringgeflecht 1 ist in allen Beispielen aus untereinander gleichen kreisförmigen Ringen 2 gebildet. Innerhalb des Geflechts ist jeder Ring 2 mit vier benachbarten Ringen verkettet; am Rand des Geflechts und an Nahtstellen, welche zur Ausformung der Finger eines Handschuhs gebildet werden, ist der Grad der Verkettung natürlich geringer.

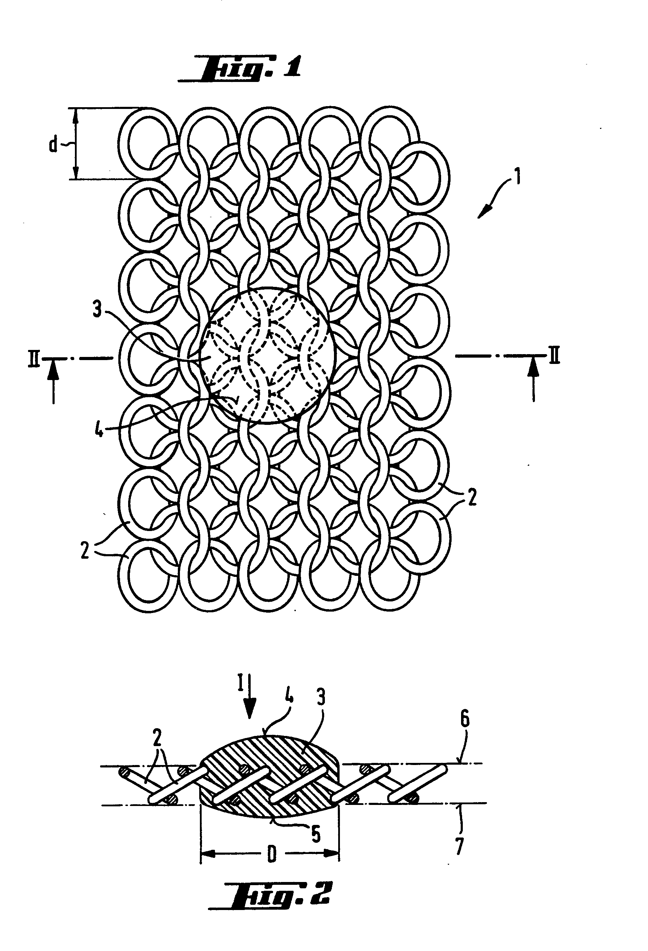

Im Beispiel der Fig. 1 und 2 ist das Metallringgeflecht 1 stellenweise in bikonvexe Linsen 3 aus elastomerem Werkstoff, insbesondere Kunststoff, eingebettet. Die Oberseite 4 der Linse 3 bedeckt einen Teil der Oberseite 6 des Metallringgeflechts und die schwächer als die Oberseite 4 gekrümmte Unterseite 5 der Linse 3 bedeckt einen entsprechenden Teil der Unterseite 7 des Geflechts. Der Durchmesser D der Linse 3 beträgt ungefähr das Zweifache des Aussendurchmessers d eines Rings 2.

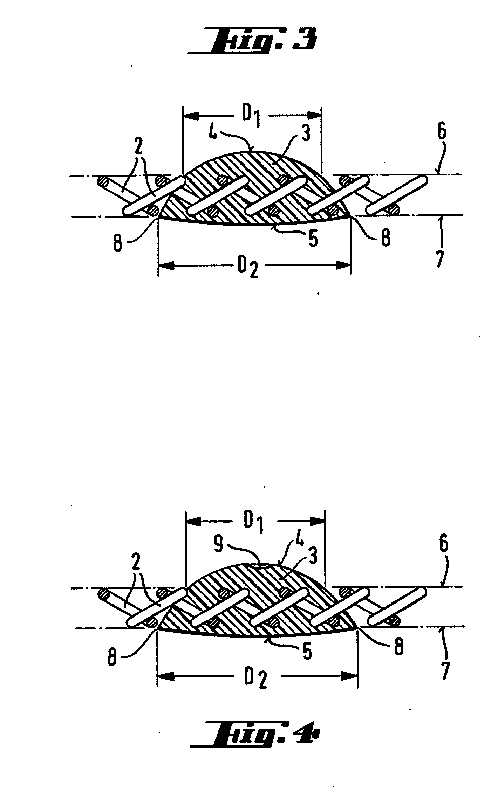

Die in Fig. 3 dargestellte Linse 3 aus elastomerem Werkstoff, insbesondere Kunststoff, unterscheidet sich von jener aus Fig. 2 darin, dass ihr in Höhe der Oberseite 6 des Geflechts — repräsentiert durch die gestrichelt eingezeichnete obere tangierende Ebene des Geflechts — gemessener Durchmesser $D_1$ kleiner ist als der Durchmesser $D_2$, welcher in Höhe der Unterseite 7 — repräsentiert durch die gestrichelt eingezeichnete untere tangierende Ebene des Geflechts — gemessen wird. Der Rand 8 der Linse 3 liegt deshalb nicht an der Oberseite des Geflechts 1, sondern nahe der Unterseite des Geflechts und ist gegen ein Abrubbeln geschützt.

Die in Fig. 4 dargestellte Linse 3 aus elastomerem Werkstoff, insbesondere Kunststoff, unterscheidet sich von der in Fig. 3 dargestellten Linse darin, dass sie im Zentrum ihrer Oberseite 4 eine flache Mulde 9 aufweist, welche die Griffigkeit erhöht.

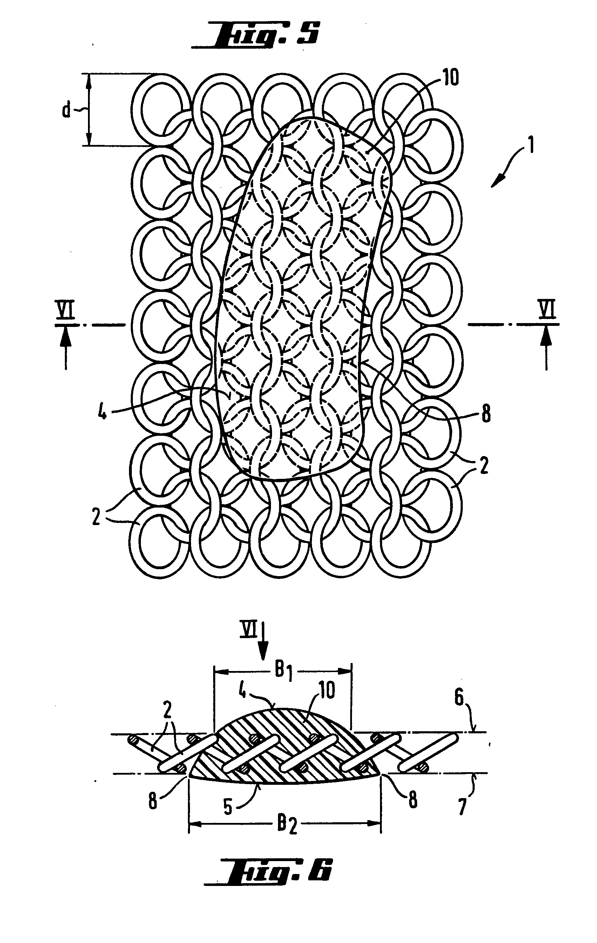

Fig. 5 zeigt ein Stück Metallringgeflecht 1, in welchem ein Strang 10 aus elastomerem Werkstoff, insbesondere Kunststoff, verankert ist. Der Strang 10 verläuft bogenförmig, was zum Anpassen an Konturen und Bewegungsabläufe einer Hand zweckmässig sein kann. Natürlich könnten auch anders geformte Stränge im Metallringgeflecht verankert werden. Fig. 6 zeigt den Strang 10 aus Fig. 5 im Querschnitt; man erkennt, dass die Querschnittsgestalt dem Querschnitt der Linse 3 in Fig. 3 ähnelt: die Oberseite 4 ist stärker konvex als die Unterseite und die Breite $B_2$ des Strangs ist an der Geflechtunterseite 7 gemessen grösser als die an der Geflechtoberseite 6 gemessene Breite $B_1$, und beide Breitenmasse sind grösser als der Aussendurchmesser d eines Rings.

Die Ränder 8 der Linsen 3 bzw. des Strangs 10 sind idealisiert dargestellt, ihre Form wird in der Praxis zumeist unregelmässig sein.

## Patentansprüche

1. Metallringgeflecht für Schutzhandschuhe, dadurch gekennzeichnet, dass es stellenweise in rutschhemmenden elastomeren Werkstoff so eingebettet ist, dass es von dem rutschhemmenden Werkstoff unter stellenweiser Bedeckung sowohl seiner Unterseite (7) als auch seiner Oberseite (6) durchdrungen ist.

2. Metallringgeflecht nach Anspruch 1, dadurch gekennzeichnet, dass der rutschhemmende Werkstoff in Gestalt von Strängen (10) oder Fladen (3) auf dem Geflecht (1) angeordnet ist.

3. Metallringgeflecht nach Anspruch 2, dadurch gekennzeichnet, dass die Stränge (10) oder Fladen (3) wenigstens auf ihrer Oberseite (4), vorzugsweise auch auf ihrer Unterseite (5) überwiegend konvex geformt sind.

4. Metallringgeflecht nach Anspruch 3, dadurch gekennzeichnet, dass die Unterseite (5) der Stränge (10) oder Fladen (3), sofern sie konvex geformt ist, schwächer gekrümmt ist als ihre Oberseite (4).

5. Metallringgeflecht nach Anspruch 3 oder 4, dadurch gekennzeichnet, dass die Fladen (3) auf ihrer Oberseite (4) im Zentrum abgeplattet sind oder eine flache Einbuchtung (9) besitzen.

5. Metallringgeflecht nach einem der Ansprüche 2 bis 5, dadurch gekennzeichnet, dass die Breite (B) der Stränge (10) bzw. die Querschnittsfläche der Fladen (3) an der Oberseite (6) des Metallringgeflechts (1) gemessen kleiner ist als an dessen Unterseite (7) gemessen.

7. Metallringgeflecht nach einem der Ansprüche 2 bis 6, dadurch gekennzeichnet, dass die Fladen (3) aus dem rutschhemmenden Werkstoff Linsenform besitzen.

8. Metallringgeflecht nach einem der Ansprüche 2 bis 7, dadurch gekennzeichnet, dass die Fladen (3) eine Grundfläche zwischen 30 mm² und 100 mm², insbesondere von ca. 60 mm², aufweisen.

9. Metallringgeflecht nach einem der Ansprüche 2 bis 7, dadurch gekennzeichnet, dass die Grundfläche der Fladen (3) das Dreifache bis Fünfzehnfache, insbesondere das Vierfache bis Zehnfache der Fläche beträgt, welche ein Metallring (2) des Metallringgeflechts (1) unter Zugrundelegen seines Aussenmasses d einschliesse.

10. Metallringgeflecht nach einem der vorstehenden Ansprüche, dadurch gekennzeichnet, dass der rutschhemmende, elastomere Werkstoff ein Kunststoff, insbesondere auf Silikonbasis, ist.

11. Verfahren zur Herstellung eines Metallringgeflechts mit den Merkmalen nach einem der Ansprüche 1 bis 10, dadurch gekennzeichnet, dass ein an sich bekanntes, noch keinen rutschhemmenden Werkstoff tragendes Metallringgeflecht stellenweise zwischen die beiden Halbschalen einer zweiteiligen Form eingelegt wird und dass der rutschhemmende Werkstoff durch eine zentrale Öffnung in einer der Halbschalen, vorzugsweise der auf der Oberseite des Metallringgeflechts liegenden Halbschale, unter Druck in vorgewählter Menge eingespritzt wird, und dass die beiden Halbschalen nach dem Verfestigen des rutschhemmenden, elastomeren Werkstoffs entfernt werden.

12. Verfahren nach Anspruch 11, gekennzeichnet durch die Verwendung eines Silikonkautschuks als rutschhemmender Werkstoff.

13. Verfahren nach Anspruch 11 oder 12, dadurch gekennzeichnet, dass zunächst aus dem noch keinen rutschhemmenden Werkstoff tragenden Metallringgeflecht ein Handschuh gebildet und anschliessend das Geflecht des Handschuhs, vorzugsweise nur auf der Handinnenseite, stellenweise in rutschhemmenden Werkstoff eingebettet wird.

14. Schutzhandschuh aus einem Metallringgeflecht, welches gemäss einem der Ansprüche 1 bis 13 ausgebildet ist.

## Claims

1. A metal ring fabric for protective mittens, characterized in that it is embedded in part in slippage-resisting elastomeric material in such a manner that the slippage-resisting material extends through the fabric and covers the same in part on its underside (7) and on its upper side (6).

2. A metal ring fabric according to claim 1, characterized in that the slippage-resisting material is arranged on the fabric (1) in the form of strips (10) or cakes (3).

3. A metal ring fabric according to claim 2, characterized in that the strips (10) or cakes (3) are mainly convex at least on their upper side (4) and preferably also on their underside (5).

4. A metal ring fabric according to claim 3, characterized in that a convexly curved underside (5) of the strips (10) or cakes (3) has a smaller curvature than its upper side (4).

5. A metal ring fabric according to claim 3 or 4, characterized in that the cakes (3) are flattened at the center of their upper side or are formed there with a shallow depression (9).

6. A metal ring fabric according to any of claims 2 to 5, characterized in that the width (8) of the strips (10) or the cross-sectional area of the cakes (3) when measured on the upper side (6) of the metal ring fabric (1) is smaller than on its underside (7).

7. A metal ring fabric according to any of claims 2 to 6, characterized in that the cakes (3) made of the slippage-resisting material are lens-shaped.

8. A metal ring fabric according to any of claims 2 to 7, characterized in that the cakes (3) have a base area between 30 mm$^2$ and 100 mm$^2$, particularly of about 60 mm$^2$.

9. A metal ring fabric according to any of claims 2 to 7, characterized in that the base area of the cakes (3) is three to fifteen times, particularly four to ten times, the area that is circumscribed by a metal ring (2) of the metal ring fabric (1) in consideration of the overall dimension d of said ring.

10. A metal ring fabric according to any of the preceding claims, characterized in that the slippage-resisting elastomeric material is a plastic material particularly on the basis of silicone.

11. A process of manufacturing a metal ring fabric embodying the features of any of claims 1 to 10, characterized in that a portion of metal ring fabric which is known per se and does not yet carry a slippage-resisting material is placed between the two sections of a two-part mold, a preselected quantity of the slippage-resisting material is injected under pressure through a central opening in one of the mold sections, preferably in the mold section which lies on the top of the metal ring fabric, and the two mold sections are removed when the slippage-resisting elastomeric material has solidified.

12. A process according to claim 11, characterized in that a silicone rubber is used as a slippage-resisting material.

13. A process according to claims 11 or 12, characterized in that a mitten is initially formed from the metal ring fabric when the same does not yet carry a slippage-resisting material and then a portion of the mitten fabric, preferably only on the inside of the hand, is embedded in slippage-resisting material.

14. A protective mitten consisting of a metal ring fabric which is in accordance with any of claims 1 to 13.

**Revendications**

1. Treillis en anneaux métalliques pour gants de protection caractérisé par le fait qu'il est enrobé par endroits dans un matériau élastomère antidérapant de telle manière que ce matériau antidérapant le pénètre en recouvrant par entroits aussi bien son dessous (7) que son dessus (6).

2. Treillis en anneaux métalliques selon la revendication 1, caractérisé par le fait que le matériau antidérapant est disposé sur le treillis sous forme de cordons (10) ou de galettes (3).

3. Treillis en anneaux métalliques selon la revendication 2, caractérisé par le fait que les cordons (10) ou les galettes (3) sont dans une large mesure convexes, au moins sur le dessus (4), mais de préférence aussi sur le dessous (5).

4. Treillis en anneaux métalliques selon la revendication 3, caractérisé par le fait que si le dessous (5) des cordons (10) ou des galettes (3) a une forme convexe, il est moins bombé que le dessus (4).

5. Treillis en anneaux métalliques selon la revendication 3 ou 4, caractérisé par le fait que le dessus (4) des galettes (3) est aplati au milieu ou que l'on y a pratiqué une échancrure plate (9).

6. Treillis en anneaux métalliques selon l'une des revendications 2 à 5, caractérisé par le fait que la largeur (B) des cordons ou la surface des galettes (3) mesurée sur le dessus (6) du treillis en anneaux métalliques (1) est inférieure à celle mesurée sur son dessous (7).

7. Treillis en anneaux métalliques selon l'une des revendications 2 à 6, caractérisé par le fait que les galettes (3) en matériau antidérapant ont une forme lenticulaire.

8. Treillis en anneaux métalliques selon l'une des revendications 2 à 7, caractérisé par le fait que les galettes (3) ont une surface de base située entre 30 et 100 mm$^2$ et que cette surface est surtout de l'ordre de 60 mm$^2$.

9. Treillis en anneaux métalliques selon l'une des revendications 2 à 7, caractérisé par le fait que la surface de base des galettes (3) se situe entre trois et quinze fois, ou mieux entre quatre et dix fois la surface qu'entoure un anneau métallique (2) du treillis (1) en se basant sur sa cote extérieure d.

10. Treillis en anneaux métalliques selon l'une des revendications qui précèdent, caractérisé par le fait que le matériau élastomère antidérapant est une matière plastique, de préférence à base de silicone.

11. Procédé pour la fabrication d'un treillis en anneaux métalliques présentant les caractéristiques énoncées dans les revendications 1 à 10, caractérisé par le fait que l'on place un treillis en anneaux métalliques classique, n'étant pas encore recouvert d'un matériau antidérapant par endroits, entre les deux demi-coquilles d'un moule en deux pièces et que l'on injecte le matériau antidérapant sous pression et dans la quantité prescrite par un orifice centrale pratiqué dans l'une des deux demi-coquilles, de préférence dans celle qui se trouve sur le dessus du traillis en anneaux métalliques, et que l'on enlève les deux demi-coquilles une fois que le matériau élastomère antidérapant a pris.

12. Procédé selon la revendication 11, caractérisé par l'utilisation d'un caoutchouc à la silicone comme matériau antidérapant.

13. Procédé selon la revendication 11 ou 12, caractérisé par le fait que l'on forme tout d'abord un gant dans le treillis en anneaux métalliques non encore recouvert d'un matériau antidérapant et que l'on enrobe ensuite le treillis de ce gant par endroits dans un matériau antidérapant, de préférence seulement sur le côté qui recouvre la paume de la main.

14. Gant de protection en treillis d'anneaux métalliques réalisé selon l'une des revendications 1 à 13.

*Fig: 1*

*Fig: 2*

7

Fig. 3

Fig. 4

## Fig. 5

## Fig. 6